# EUROPÄISCHE PATENTSCHRIFT

(11) **EP 1 568 625 B1**
(45) Veröffentlichungstag und Bekanntmachung des Hinweises auf die Patenterteilung: **23.08.2006**
(21) Anmeldenummer: 05003613.6
(22) Anmeldetag: 19.02.2005
(51) Int. Cl.: B65G 15/14, B29C 49/42, B29C 49/78

(54) **Inspektionsmaschine mit einer Vorrichtung zum Transportieren von Hohlkörpern**
Inspection machine with device for transporting hollow articles
Machine d'inspection avec un dispositif pour le transport d'articles creux

(30) Priorität: 27.02.2004 DE 102004009698
(43) Veröffentlichungstag der Anmeldung: 31.08.2005
(73) Patentinhaber: KRONES AG, 93073 Neutraubling (DE)
(72) Erfinder: Ederer, Roland, 93086 Wörth/Donau (DE)

(56) Entgegenhaltungen:
- EP-A- 0 466 278
- EP-A- 0 842 875
- US-A- 4 680 463
- US-A- 5 553 698
- PATENT ABSTRACTS OF JAPAN Bd. 2000, Nr. 09, 13. Oktober 2000 (2000-10-13) -& JP 2000 168945 A (KIRIN TECHNO SYSTEM:KK), 20. Juni 2000 (2000-06-20)

## Beschreibung

Die Erfindung betrifft eine Inspektionsmaschine mit Inspektionseinheiten und mit einer Vorrichtung zum Transportieren von Hohlkörpern, gemäß dem Oberbegriff des Anspruchs 1.

Derartige Inspektionsmaschinen werden in Industriezweigen verwendet, die Hohlkörper zum Aufbewahren ihrer Produkte benutzen. Besondere Verwendung finden solche Inspektionsmaschinen in der Lebensmittelindustrie, insbesondere in der Getränkeindustrie. Hier werden sie unter anderem dazu eingesetzt, um Kunststoff-Preforms, aus denen später die Hohlkörper entstehen, auf etwaige Fehler, wie z.B. Unregelmäßigkeiten im Mündungsdurchmesser oder Beschädigungen zu untersuchen. In der Getränkeindustrie handelt es sich bei den genannten Kunststoffhohlkörpern oft um thermoplastische Kunststoffhohlkörper, vorzugsweise PET-Flaschen (Polyethylenterephthalat). Zur Inspektion werden sie mit Hilfe einer Transportvorrichtung durch die Inspektionsmaschine, die eine oder mehrere Inspektionseinheiten enthalten kann, transportiert.

Es sind bereits Vorrichtungen bekannt, bei denen die einen Tragring aufweisenden Preforms mit Hilfe von Riemenförderern durch die Inspektionsmaschine transportiert werden (JP-OS 2000-168945). Bei dieser Vorrichtung, die eine Schrägstellung gegenüber der Bodenebene aufweist, werden die Preforms, deren durch die Tragringe gebildete Tragringebene zunächst noch parallel zur Bodenebene ist, durch eine Vorrichtung schräg gestellt, so dass die Tragringebene nun parallel zu den Riemenförderern ist und die Preforms so durch den Inspektionsbereich der Maschine transportiert werden können. Die Riemen sind dabei als Endlosriemen ausgebildet, die mit Hilfe von Umlenkrollen jeweils in einer vertikalen Umlaufebene umlaufen. Die Umlaufebenen stehen dabei im wesentlichen paarweise senkrecht auf der Tragringebene, weshalb der Rücklauf der Transportriemen im wesentlichen über bzw. unter den Preforms beziehungsweise deren Tragringen erfolgt. Die Inspektionsgeräte wie beispielsweise eine CCD-Kamera und eine Beleuchteinheit befinden sich über und/oder unter dem Riemenrücklauf. Aus dieser Anordnung ergibt sich das Problem, dass die Inspektionseinheiten relativ weit entfernt von den Preforms sind, da das rücklaufende Trum der Transportriemen zwischen den Preforms und den Inspektionseinheiten verläuft. Zudem ist das zur Verfügung stehende Blickfeld stark begrenzt. Deswegen kann es bei hohen Durchlaufgeschwindigkeiten durch den Inspektionsbereich zu unzureichenden Inspektionsergebnissen bezüglich der Qualität der Preforms kommen. Die Qualität der Preforms wirkt sich aber maßgeblich auf die Qualität der Endprodukte beziehungsweise auf die Leistung der die Preforms weiterverarbeitenden Maschinen (wie zum Beispiel eine Streckblasmaschine) aus.

Der Erfindung liegt deshalb die Aufgabe zu Grunde, eine Inspektionsmaschine mit guten Inspektionsmöglichkeiten trotz kompakten Volumens bereitzustellen.

Erfindungsgemäß wird diese Aufgabe durch die im Anspruch 1 angegebenen kennzeichnenden Merkmale gelöst.

Bevorzugte Weiterbildungen sind Gegenstand der Unteransprüche.

Bei einer erfindungsgemäßen Vorrichtung werden die Hohlkörper in Richtung einer Inspektionsmaschine zugeführt, an deren Eingang sie von vier Transportelementen am Tragring erfasst und durch die Inspektionsmaschine transportiert werden. Vorzugsweise handelt es sich bei mindestens einem der Transportelemente um einen Endlosriemen, der in einer Umlaufebene über Umlenk- bzw. Antriebsrollen geführt umläuft.

Vorzugsweise ist mindestens einer dieser Riemen antreibbar, um eine Vorwärtsbewegung innerhalb der Inspektionsmaschine zu gewährleisten. Dadurch ist ein gefällefreier Transport realisierbar. Die anderen Riemen werden entweder nicht selbstständig oder durch eine Verbindung zum ersten Riemen angetrieben. In einer bevorzugten Ausführungsform handelt es sich bei den Verbindungen um verstellbare Gelenkwellen. Denkbar ist ferner ein jeweils eigener Antrieb für jeden Riemen.

In einer weiteren bevorzugten Ausführungsform ist mindestens ein Riemen separat und dadurch auch mit unterschiedlicher Geschwindigkeit relativ zu einem der anderen Riemen antreibbar. Dadurch kann eine Rotation des Preforms um seine Längsachse erzeugt werden. Diese Lösung ist insbesondere bei einer Seitenwandinspektion von Vorteil, weil der gesamte Umfang durch Mehrfachaufnahmen erfassbar ist

Die Umlaufebenen, in denen die Riemen umlaufen, sind gegenüber der Tragringebene in einem Winkel größer 0° und kleiner 90° angeordnet. In einer bevorzugten Ausführungsform beträgt der Winkel zwischen 20° und 80°, vorzugsweise zwischen 55° und 65°. Durch diese schräge Anordnung entsteht über beziehungsweise unter dem Preform mindestens ein erweiterter Freiraum in der Inspektionsmaschine, in den verschiedene Inspektionsmaschine oder Bestandteile davon wie zum Beispiel eine Kamera (z.B. CCD-Kamera), Sensoren (z.B. zur Luftanalyse im Preform) oder Beleuchtungseinheiten (z.B. torusförmige Halogenlampe unter der Kamera oder Lampe unter dem Preform) eingebracht werden können.

Außerdem ist es Vorteilhafterweise möglich, die Inspektionseinheiten sehr nahe an den zu inspizierenden Preform, insbesondere dessen Mündung, heran zu bringen, um vor allem bei bildgebenden Inspektionsverfahren möglichst optimale Inspektionsergebnisse zu erzielen. Auf diese Weise sind großflächige Aufnahmen der interessierenden Bereiche mit hoher Auflösung erreichbar. Bei bildgebenden Inspektionsverfahren erfolgt die Inspektion der kritischen Bereiche (z.B. Mündung oder Anspritzpunkt) senkrecht von oben beziehungsweise unten. Eine Aufnahme wird dann gemacht, wenn die vorbeilaufende Längsachse des Preforms mit der zur Tragringebene des Preforms senkrecht stehenden Kameraachse fluchtet. Um ein optimales Inspektionsergebnis zu erzielen, wird der Preform nahezu gleichzeitig durch die Beleuchtungseinrichtung beleuchtet.

In einer bevorzugten Ausführungsform hat die Inspektionsmaschine vier als Riemen ausgebildete Transportvorrichtungen. In dieser Ausprägung ist es möglich, dass alle vier Winkel zwischen der Tragringebene und den Umlaufebenen gleich sind.

Die Transportvorrichtung ist so verstellbar, dass sie sowohl Preforms mit verschiedenen Tragringdicken als auch Preforms mit verschiedenen Durchmessern aufnehmen kann. Die Verstellung kann sowohl mechanisch, wie zum Beispiel über eine Kurbel und eine Spindel, als auch elektrisch, wie zum Beispiel über einen manuell oder programmgesteuerten Servomotor oder anderweitig, wie zum Beispiel pneumatisch, erfolgen.
In einer bevorzugten Ausführungsform ist der Spalt zwischen den oberen und unteren Transportelementen, in dem sich während des Transports des Preforms der Tragring befindet, kleiner als die Dicke des Tragrings, um den Transport reibschlüssig zu vollziehen. Der Spalt zwischen den beiden quer zur Längsachse des Preforms versetzten Transportelementpaaren, die den Preform am Tragring greifen, ist vorzugsweise kleiner als der Durchmesser des Preforms. Auf diese Weise wird auch bezüglich der Preformbreite ein reibschlüssiger Transport gewährleistet.

In einer weiteren Ausführungsform sind gefederte Andrückrollen vorhanden, die die Riemen in Richtung des Tragrings drücken. Dadurch können trotz des reibschlüssigen Transports der Preforms eventuelle Dicketoleranzen der Tragringe problemlos ausgeglichen werden. Es ist aber auch denkbar, anstelle der gefederten Andrückrollen feste und einstellbare Andrückrollen zu verwenden. Anstelle der festen Andrückrollen wäre aber auch ein Gleitstreifen oder ähnliches einsetzbar.

Vorzugsweise erfolgt der Transport der Hohlkörper bzw. Preforms durch die Inspektionsmaschine im wesentlichen linear und horizontal. Dadurch kann sie problemlos ohne Änderung der Höhenniveaus auch noch nachträglich in eine bestehende Linie eingebaut werden, zum Beispiel zwischen Blas- und Füllmaschine.

Es ist nicht nur möglich, die Inspektionsmaschine vor eine die Preforms weiterverarbeitende Maschine zu stellen, um diese zu inspizieren, sondern auch denkbar, die Inspektionsmaschine vor eine Füllmaschine zu stellen, um die Preforms beziehungsweise die schon fertigen Flaschen auf eventuelle Fehler zu überprüfen.

Sind Preforms fehlerhaft, so müssen Sie aussortiert und einer weiteren Verwendung entzogen werden. Aus diesem Grund befindet sich nach dem Inspektionsteil der Maschine eine ansteuerbare Aussortiereinrichtung für nicht verwendbare Preforms. Die Auswerfvorrichtung kann sowohl in die Inspektionsmaschine integriert, als auch an den auslaufseitigen Transportbereich der Maschine angeschlossen sein. Es sind im Stand der Technik verschiedenste Auswerfvorrichtungen bekannt, weshalb sie hier nicht näher beschrieben werden.

Im Nachstehenden wird ein Ausführungsbeispiel der Erfindung anhand der Zeichnungen erläutert. Es zeigt:
- Fig. 1:: Vorderansicht einer Inspektionsmaschine,
- Fig. 2:: Draufsicht auf eine Inspektionsmaschine und
- Fig. 3:: Vorderansicht der mit dem Preform in Eingriff stehenden Riemen.

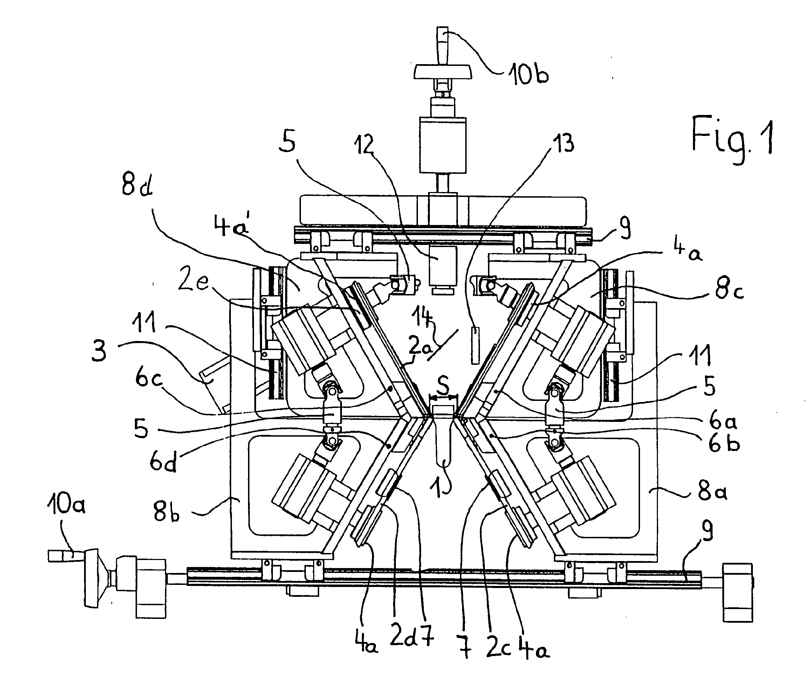

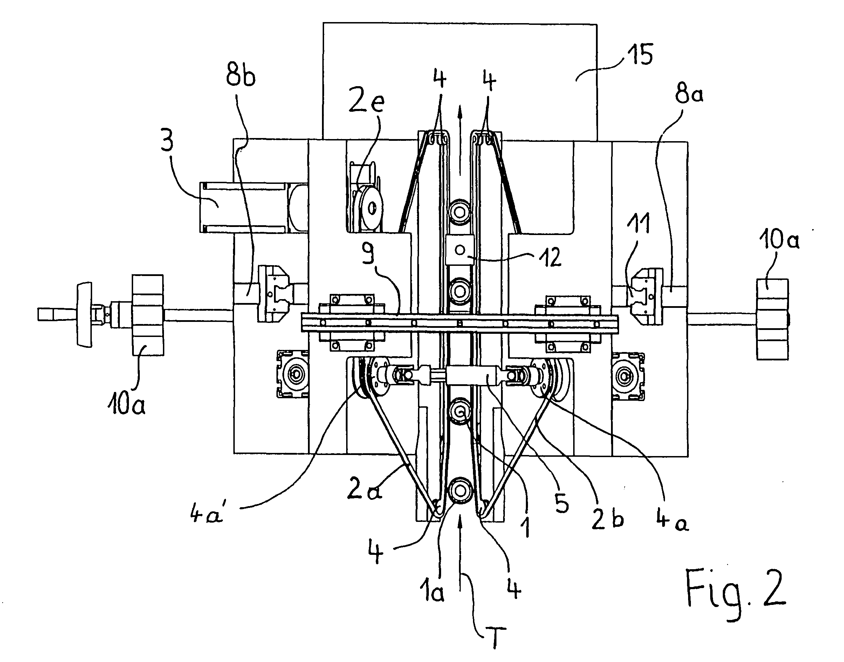

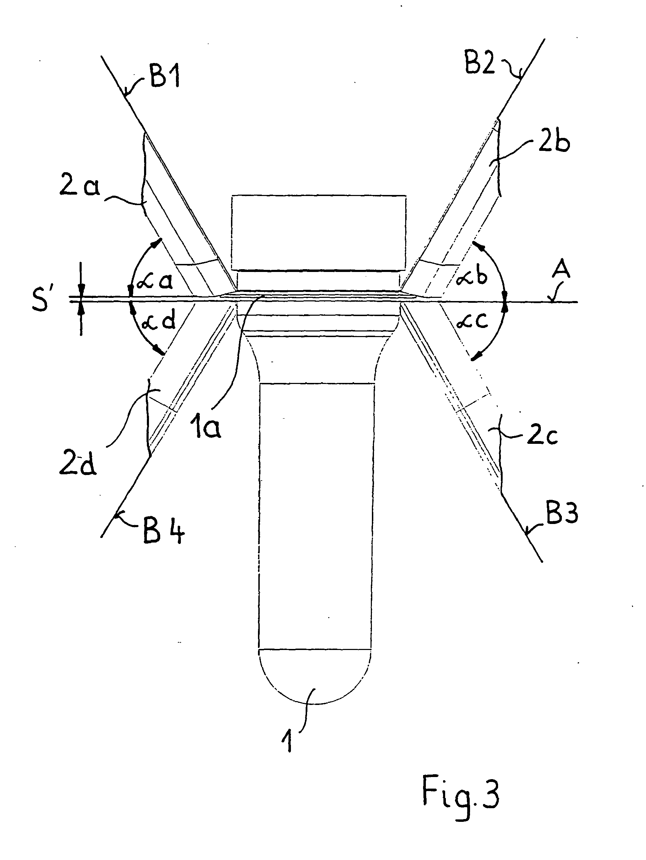

Bei diesem bevorzugten Ausführungsbeispiel nach Fig. 1, Fig. 2 und Fig. 3 wird eine Inspektionsmaschine gezeigt, bei der vier Transportelemente vorhanden sind, die jeweils als endlose Riemen 2a, 2b, 2c, 2d ausgebildet sind. Die vier Riemen sind sowohl bezüglich einer Tragringebene A als auch bezüglich der von der Längsachse eines Preforms und der Transportrichtung aufgespannten Ebene symmetrisch angeordnet und weisen gegenüber der Tragringebene A jeweils gleiche Winkel αa, αb, αc, αd auf. Dadurch entsteht in Transportrichtung der Preforms 1 gesehen eine annähernd X-förmige Anordnung der Riemen 2a, 2b, 2c, 2d und ihrer Umlaufebenen B1, B2, B3, B4 (siehe Fig. 3). Die Umlaufebenen B1-B4 sind dabei im Wesentlichen gerade und laufen parallel zu den Trägerplattenpaaren 6a-6d.
Zwischen den Schenkeln dieser X-Anordnung bietet sich über und unter dem Preform 1 jeweils genügend Platz für Inspektionseinheiten 12, 13, 14. Mit Hilfe einer Kamera 12 werden die Mündungsbereiche und gegebenenfalls die Anspritzpunkte der Preforms durch ein bildgebendes Verfahren inspiziert. Beleuchtet werden die Preforms 1 mit Hilfe einer oberhalb seitlich angebrachten Lampe 13, deren Licht mit Hilfe eines semipermeablen Spiegels 14 zum Preform 1 umgeleitet wird.

Für den Antrieb der Riemen 2a, 2b, 2c, 2d steht nur ein Motor 3 zur Verfügung, der über einen Zahnriemen 2e ein Antriebsrad 4a' antreibt. Die anderen Antriebsräder 4a sind über verstellbare Gelenkwellen 5 direkt oder indirekt mit dem ersten Antriebsrad 4a' verbunden und werden dadurch ebenfalls vom Motor 3 angetrieben. Dadurch, dass alle Antriebsräder 4a und 4a' direkt bzw. indirekt mit dem einen Motor 3 verbunden sind, besteht ein absoluter Gleichlauf. Daraus ergibt sich der Vorteil, dass sich die Preforms 1 im Laufe des Transports durch die Inspektionsmaschine nicht schief stellen. Eine Schiefstellung würde die Qualität der Inspektionsergebnisse herabsetzen.

Bei diesem konkreten Ausführungsbeispiel sind nur die Riemen 2c und 2d durch Spannrollen 7 in ihrer Spannkraft einzustellen. Es ist aber auch möglich, alle Riemen der Maschine 2a-2e durch Spannrollen 7 zu straffen. Die die Riemen 2a, 2b, 2c, 2d, 2e aufnehmenden Antriebsräder 4a', 4a und die Umlenkrollen 4 sind auf Trägerplatten 6a-6d drehbar gelagert, die ihrerseits wiederum an einem Grundgestell 8a-8d montiert sind. Zur Ausrichtung läuft das Grundgestell 8a-8d in Profilschienen 9. Die beiden Teile des Grundgestells 8c und 8d, und somit auch die auf diesen befestigten Riemen 2a und 2b, sind durch eine Verstelleinrichtung 10b vertikal verstellbar, sodass der vertikale Spalt S' zwischen dem oberen Trägerplattenpaar 6a, 6c und dem unteren Trägerplattenpaar 6b, 6d variabel ist. Die Verstelleinrichtung 10b besteht dabei aus einer Spindel und einer Kurbel. Bei Betätigung der Kurbel wird das obere Trägerplattenpaar 6a und 6c mit allen daran befestigten Elementen wie Riemen 2a, 2b, oder Antriebsrolle 4a' an den Profilschienen 11 entlang bewegt.

In diesem vertikalen Spalt S' befindet sich beim Transport von Preforms 1 der Tragring 1a. Die Einstellung des vertikalen Spalts S' ist vorhanden, weil die Inspektionsmaschine bei einem Sortenwechsel verschiedene Preforms 1 mit verschiedenen Tragringdicken 1a aufnehmen kann. Vorzugsweise wird die Einstellung des vertikalen Spalts S' so vorgenommen, dass er etwas kleiner ist als die Tragringdicke 1a des zu transportierenden Preforms 1, um ein reibschlüssiges Eingreifen der Riemen 2a, 2b, 2c und 2d am Tragring 1a zu gewährleisten.

Auch der horizontale Spalt S kann mit Hilfe einer Verstelleinrichtung 10a, die auch hier aus einer Kurbel und einer Gewindespindel besteht, verstellt werden. Das linke 6c,6d und das rechte Trägerplattenpaar 6a,6c wird vorzugsweise so eingestellt, dass der horizontale Spalt S zwischen diesen etwas kleiner ist als der Durchmesser der zu transportierenden Preforms 1, um auch hier einen reibschlüssigen Transport zu erreichen. Will man durch die Inspektionsmaschine Hohlkörper 1 mit anderem Mündungsdurchmesser transportieren, so wird die Verstelleinrichtung 10a so betätigt, dass sich die Grundgestellhälften 8a,8b horizontal quer zur Transportrichtung auseinander oder aufeinander zu bewegen, um den Spalt S größer oder kleiner werden zu lassen.

Sowohl die Spaltbreite des Spalts S als auch die des Spalts S' ist im Preformeinlaufbereich der Inspektionsmaschine größer als im weiteren Verlauf der Inspektionsmaschine. Durch die zur Größe des Spalts S und S' zusammenlaufenden Riemen wird ein Trichtereffekt erzeugt, der Problemen beim Einfädeln der Preforms 1 in die Maschine entgegenwirkt.

Die Gelenkwellen 5, die die Antriebskraft vom Motor 3 und der Antriebsrolle 4a' zu den anderen Antriebsrollen 4a übertragen, sind längsverstellbar ausgebildet. Dies ist nötig, da sich bei der horizontalen und vertikalen Verstellung der Riemen (2a-2d) zum Zweck der Aufnahme verschiedener Preforms 1 mit verschiedenen Mündungs- und Tragringgeometrien, auch die Abstände zwischen den Antriebsrollen 4a' und 4a verändern.

Die Riemen 2a, 2b, 2c und 2d sind mit einer bestimmten Geometrie ausgestattet, um möglichst gut am Tragring 1a des Preforms 1 anzuliegen (siehe Fig. 3). Die beiden unteren Riemen 2c und 2d weisen im rechten Winkel zueinander stehende Flächen auf, die mit dem Preform 1 an der Unterseite des Tragrings in Eingriff stehen, wo dieser ebenfalls einen rechten Winkel zwischen der Tragringebene A und seiner Längsachse ausbildet. Die beiden oberen Riemen 2a und 2b laufen auf der vom Preform 1 abgewandten Seite parallel mit der Tragringebene A und den unteren Riemen 2c und 2d. Auf der dem Preform 1 zugewandten Seite laufen die Riemen 2a und 2b in einem Winkel, der dem zwischen der Tragringebene A und dem oberen Teil des Tragrings entspricht. Die Innenseiten der Riemen 2a-2d, also die Seiten, an der die Riemen mit den Umlenk- 4 bzw. Antriebsrollen 4a bzw. 4a' in Eingriff stehen, sind als Zahnriemen ausgebildet. Der Übersichtlichkeit halber ist dies hier nicht abgebildet. Die Zahnriemenseite der Riemen 2a-2d besteht aus HTD, während die aufgebrachte, profilierte Seite aus Linatex ® besteht.

Am Ausgang der Inspektionsmaschine befindet sich eine Auswerfvorrichtung 15, die defekte beziehungsweise nicht mehr brauchbare Preforms 1 der weiteren Verwendung im nachfolgenden Maschinenkreislauf entzieht. Dabei handelt es sich um eine beliebige handelsübliche Auswerfvorrichtung 15, die hier der Übersichtlichkeit halber nicht detaillierter dargestellt ist.

## Patentansprüche

1. Inspektionsmaschine mit Inspektionseinheiten (12,13,14) zum Inspizieren von Hohlkörpern (1) die einen Tragring (1a) aufweisen und mit einer Vorrichtung zum Transportieren der Hohlkörper (1), bestehend aus vier die Hohlkörper (1) führenden Transportelementen (2a bis 2d), die in Umlaufebenen (B1 bis B4) endlos umlaufen, von denen mindestens eines antreibbar ist und die jeweils paarweise an gegenüberliegenden Seiten oben und unten am Tragring (1a) angreifen, **dadurch gekennzeichnet, dass** die vier Umlaufebenen (B1 bis B4) an der vom Hohlkörper (1) wegweisenden Seite in einem Winkel (αa-αd) von größer 0° und kleiner 90° zu einer Tragringebene (A) angeordnet sind und dass sie bezüglich der Transportrichtung (T) so angeordnet sind, dass sie im Wesentlichen eine X-Anordnung bilden.

2. Maschine nach Anspruch 1, **dadurch gekennzeichnet, dass** es sich bei dem mindestens einen antreibbaren Transportelement (2a bis 2d) um einen Riemen handelt.

3. Maschine nach den Ansprüchen 1 bis 2, **dadurch gekennzeichnet, dass** das mindestens eine antreibbare Transportelement (2a bis 2d) an Umlenkrollen (4) und Antriebsrollen (4a,4a') anliegt.

4. Maschine nach einem der vorhergehenden Ansprüche, **dadurch gekennzeichnet, dass** es sich bei mindestens zwei Transportelementen (2a bis 2d) um antreibbare Riemen handelt.

5. Maschine nach Anspruch 4, **dadurch gekennzeichnet, dass** mindestens ein Transportelement (2a bis 2d) separat antreibbar ist.

6. Maschine nach wenigstens einem der vorangegangenen Ansprüche 1 bis 5, **dadurch gekennzeichnet, dass** die Winkel (αa-αd) zwischen den Umlaufebenen (B1 bis B4) und der Tragringebene (A) gleich sind.

7. Maschine nach wenigstens einem der vorangegangenen Ansprüche 1 bis 6, **dadurch gekennzeichnet, dass** die Winkel (αa bis αd) zwischen 20° und 80°, vorzugsweise zwischen 55° und 65° liegen.

8. Maschine nach wenigstens einem der vorangegangenen Ansprüche, **dadurch gekennzeichnet, dass** die vier Transportelemente (2a bis 2d) als Riemen ausgebildet sind.

9. Maschine nach Anspruch 8, **dadurch gekennzeichnet, dass** mindestens ein Riemenpaar (2a,2b; 2c,2d), das oben und unten am Tragring (1a) angreift, vertikal verstellbar ist, um einen Spalt S', in dem sich beim Transport der Hohlkörper (1) der Tragring (1a) befindet, variieren zu können.

10. Maschine nach Anspruch 9, **dadurch gekennzeichnet, dass** der Spalt S' kleiner als die Dicke des Tragrings (1a) der Hohlkörper (1) ist und die Riemen (2a bis 2d) somit reibschlüssig am Tragring (1a) angreifen.

11. Maschine nach einem der vorhergehenden Ansprüche, **dadurch gekennzeichnet, dass** mindestens ein Riemenpaar (2a,2d; 2b,2c), das seitlich am Hohlkörper (1) angreift, quer zu einer Transportrichtung (T) verstellbar ist, um Hohlkörper (1) verschiedener Durchmesser aufnehmen zu können.

12. Maschine nach den Ansprüchen 8 bis 11 **dadurch gekennzeichnet, dass** die Umlaufebenen (B1 bis B4)bezüglich der Transportrichtung (T) der Hohlkörper (1) so angeordnet sind, dass sie eine symmetrische X-Anordnung bilden.

13. Maschine nach einem der vorhergehenden Ansprüche, **dadurch gekennzeichnet, dass** sich im oberen und/oder unteren Schenkelbereich der X-Anordnung mindestens eine Inspektionseinheit (12,13,14) zum Inspizieren der Hohlkörper (1) befindet.

14. Maschine nach einem der vorhergehenden Ansprüche, **dadurch gekennzeichnet, dass** der Transport der Hohlkörper (1) im Wesentlichen linear und horizontal erfolgt.

15. Maschine nach einem der vorhergehenden Ansprüche, **dadurch gekennzeichnet, dass** die Riemen (2a bis 2d) durch jeweils einen eigenen Motor (3) angetrieben werden.

16. Maschine nach einem der vorhergehenden Ansprüche, **dadurch gekennzeichnet, dass** nur ein Riemen (2a) durch einen Motor (3) angetrieben wird, während der Antrieb der anderen Riemen (2b bis 2d) über Verbindungen (5) zum ersten erfolgt.

17. Maschine nach einem der vorhergehenden Ansprüche, **dadurch gekennzeichnet, dass** nach der Transportstrecke durch die Inspektionsmaschine eine Auswerfvorrichtung (15) für nicht verwendbare Hohlköper (1) angeordnet ist.

18. Maschine nach einem der vorangegangenen Ansprüche, **dadurch gekennzeichnet, dass** die Hohlkörper (1) Gefäße sind, insbesondere Flaschen aus Kunststoff oder Preforms zur Herstellung derselben.

## Claims

1. An inspection machine with inspection units (12, 13, 14) for inspecting hollow bodies (1) which exhibit a support ring (1a) and with a device for conveying the hollow bodies (1), consisting of four conveying elements (2a to 2d) which rotate endlessly in the planes of rotation(B1 to B4), at least one element of which is drivable and which grip in pairs on opposite sites at the top and bottom of the support ring (1a), **characterised in that** the four planes of rotation (B1 to B4) are arranged on the side pointing away from the hollow body (1) at an angle(aa-ad) greater than 0° and smaller than 90° to a support ring plane (A), and **in that** they are arranged relative to the conveying direction (T) so that they form essentially an X arrangement.

2. The machine according to Claim 1, **characterised in that** at least one drivable conveying element (2a to 2d) is a belt.

3. The machine according to Claims 1 to 2, **characterised in that** at least one drivable conveying element (2a to 2d) rest on deflector rolls (4) and drive rolls (4a, 4a').

4. The machine according to any one of the preceding claims, **characterised in that** at least two conveying elements (2a to 2d) are drivable belts.

5. The machine according to Claim 4, **characterised in that** at least one conveying element (2a to 2d) is separately drivable.

6. The machine according to at least one of the preceding Claims 1 to 5, **characterised in that** the angles ((αa-ad) between the planes of rotation (B1 to B4) and the support ring plane (A) are equal.

7. The machine according to at least one of the preceding Claims 1 to 6, **characterised in that** the angles ((αa to αd) lie between 20° and 80°, preferably between 55° and 65°.

8. The machine according to at least one of the preceding claims, **characterised in that** the four conveying elements (2a to 2d) are designed as belts.

9. The machine according to Claim 8, **characterised in that** at least one pair of belts (2a, 2b; 2c, 2d), which engage at the top and bottom of the support ring (1a), is vertically adjustable in order to be able to vary a gap S', in which the support ring (1 a) is located during conveying of the hollow bodies (1).

10. The machine according to Claim 9, **characterised in that** the gap S' is smaller than the thickness of the support ring (1a) of the hollow bodies (1), and the belts (2a to 2d) therefore grip the support ring (1a) positively with friction.

11. The machine according to any one of the preceding claims, **characterised in that** at least one pair of belts (2a, 2d; 2b, 2c), which grips the hollow body (1) laterally and is adjustable transversely to a conveying device (T) in order to be able to receive hollow bodies (1) of different diameters.

12. The machine according to Claims 8 to 11, **characterised in that** the planes of rotation (B1 to B4) are arranged relative to the conveying device (T) of the hollow bodies so that they form a symmetrical x-arrangement.

13. The machine according to any one of the preceding claims **characterised in that** at least one inspection unit (12, 13, 14) for inspecting the hollow bodies (1) are located in the upper and/or lower leg region of the x-arrangement.

14. The machine according to any one of the preceding claims, **characterised in that** the conveying of the hollow bodies (1) takes place essentially linearly and horizontally.

15. The machine according to any one of the preceding claims, **characterised in that** the belts (1a to 2d) are each driven by a separator motor (3).

16. The machine according to any one of the preceding claims, **characterised in that** only one belt (2a) is driven by a motor (3), whilst the other belts (2b to 2d) are driven for the first time by connections (5).

17. The machine according to any one of the preceding claims, **characterised in that** an ejection device (15) is arranged for unusable hollow bodies (1) is arranged after the conveying section through the inspection machine.

18. The machine according to any one of the preceding claims, **characterised in that** the hollow bodies (1) are vessels, particularly plastic bottles or performs for manufacturing the same.

## Revendications

1. Machine d'inspection comportant des unités d'inspection (12, 13, 14) d'articles creux (1) présentant un anneau porteur (1a), et un dispositif de transport des articles creux (1) constitué par quatre éléments de transport (2a à 2d) déplaçant les articles creux (1) et parcourant un circuit sans fin dans des plans de circulation (B1 à B4), au moins un des éléments étant entraîné et les éléments par paire respective saisissant l'anneau porteur (1a) sur des côtés opposés par le haut et par le bas,
**caractérisée en ce que**
les quatre plans de circulation (B1 à B4) sont orientés en s'écartant de chaque côté de l'article creux (1), selon un angle (αa-αd) supérieur à 0° et inférieur à 90° par rapport à un plan d'anneau porteur (A), et sont orientés par rapport à la direction de transport (T) en formant essentiellement un montage en X.

2. Machine selon la revendication 1,
**caractérisée en ce qu'**
au moins un élément de transport (2a à 2d) entraîné consiste en une courroie.

3. Machine selon les revendications 1 et 2,
**caractérisée en ce qu'**
au moins un élément de transport (2a à 2d) entraîné est appliqué sur des poulies de renvoi (4) et des poulies d'entraînement (4a, 4a').

4. Machine selon l'une quelconque des revendications précédentes, **caractérisée en ce qu'**
au moins deux éléments de transport (2a à 2d) sont des courroies que l'on peut entraîner.

5. Machine selon la revendication 4,
**caractérisée en ce qu'**
au moins un des éléments de transport (2a à 2d) peut être entraîné séparément.

6. Machine selon l'une au moins des revendications 1 à 5,
**caractérisée en ce que**
les angles (αa-αd) formés par les plans de circulation (B1 à B4) et le plan de l'anneau porteur (A) sont identiques.

7. Machine selon l'une au moins des revendications 1 à 6,
**caractérisée en ce que**
les angles (αa-αd) sont compris entre 20° et 80°, de préférence entre 55° et 65°.

8. Machine selon au moins l'une quelconque des revendications précédentes,
**caractérisée en ce que**
les quatre éléments de transport (2a à 2d) sont des courroies.

9. Machine selon la revendication 8,
**caractérisée en ce qu'**
au moins une paire de courroies (2a, 2b ; 2c, 2d) saisissant l'anneau porteur (1a) par le haut et par le bas est mobile verticalement afin de pouvoir faire varier un interstice S' dans lequel se trouve l'anneau porteur (1a) lors du transport des articles creux (1).

10. Machine selon la revendication 9,
**caractérisée en ce que**
l'interstice S' est plus mince que l'épaisseur de l'anneau porteur (1a) de l'article creux (1) et les courroies (2a à 2b) saisissent ainsi l'anneau porteur (1a) par frottement.

11. Machine selon au moins l'une quelconque des revendications précédentes,
**caractérisée en ce qu'**
au moins une paire de courroies (2a, 2b ; 2c, 2d) saisissant l'anneau porteur (1a) par le côté est mobile transversalement à une direction de transport (T) afin de pouvoir recevoir des articles creux (1) de différents diamètres.

12. Machine selon les revendications 8 à 11,
**caractérisée en ce que**
les plans de circulation (B 1 à B4) sont orientés par rapport à la direction de transport (T) des articles creux (1) de manière à former un montage symétrique en X.

13. Machine selon au moins l'une quelconque des revendications précédentes,
**caractérisée par**
au moins une unité d'inspection (12, 13, 14) des articles creux (1) dans la zone de branche supérieure et/ou inférieure du montage en X.

14. Machine selon au moins l'une quelconque des revendications précédentes,
**caractérisée en ce que**
le transport des articles creux (1) s'effectue de manière essentiellement linéaire et horizontale.

15. Machine selon au moins l'une quelconque des revendications précédentes,
**caractérisée en ce que**
les courroies (2a à 2d) sont entraînées chacune par un moteur (3) distinct.

16. Machine selon au moins l'une quelconque des revendications précédentes,
**caractérisée en ce que**
seule une courroie (2a) est entraînée par un moteur (3) tandis que l'entraînement des autres courroies (2b à 2d) s'effectue via des connexions (5) à la première.

17. Machine selon au moins l'une quelconque des revendications précédentes,
**caractérisée en ce qu'**
un dispositif de rejet (15) destiné aux articles creux (1) non utilisables est disposé postérieurement au trajet de transport passant par la machine d'inspection.

18. Machine selon au moins l'une quelconque des revendications précédentes,
**caractérisée en ce que**
les articles creux (1) sont des récipients, notamment des bouteilles en matière plastique ou des préformes pour la fabrication de celles-ci.
